# EUROPEAN PATENT SPECIFICATION

(11) **EP 1 726 853 B1**
(45) Date of publication and mention of the grant of the patent: **26.11.2008**
(21) Application number: 06252652.0
(22) Date of filing: 22.05.2006
(51) Int. Cl.: F16J 15/32

(54) **Brush seal assembly and method for assembling same**
Bürstendichtunganordnung und Verfahren zur Herstellung
Ensemble de joint en brosses et procédé de fabrication

(30) Priority: 25.05.2005 US 137066
(43) Date of publication of application: 29.11.2006
(73) Proprietor: United Technologies Corporation, Hartford, CT 06101 (US)
(72) Inventor: Addis, Mark, Kennebunk, Maine 04043 (US)
(74) Representative: Leckey, David Herbert

(56) References cited:
- GB-A- 2 119 037
- US-A- 5 474 305
- US-A- 5 503 405
- US-A1- 2004 007 822
- US-A1- 2005 098 958

## Description

### FIELD OF THE INVENTION

This invention relates generally to brush seals, and more particularly to cartridge-style brush seal for use in small engines or screw compressors.

### BACKGROUND OF THE INVENTION

Brush seals comprising a plurality of bristles sandwiched between a side plate and a back plate are used to prevent or inhibit fluid flow from a higher pressure region to a lower pressure region. Typically, the brush seal seals the gap between a stationary member and a rotating member such as a shaft where the higher pressure region exists on one side of the members and the low pressure region on the other side. The seal is attached to either the stationary or the rotating member with its bristles extending across the gap therebetween. Brush seals are also designed to provide a controlled leakage flow from a higher pressure region to a lower pressure region through a gap disposed between the stationary member and the rotating member.

The brush seal includes one or more arrays of brushes that are generally radial in orientation and extend between the rotating surface and the stationary surface. The back plate is on the lower pressure side and extends nearly the length of the brushes to prevent the bristles of the brushes from bending away from the high pressure side. Typically, brush seals require special tools for installation. Moreover, brush seals require machining to a high degree of tolerance in order to effectively seal a gap between the stationary member and the rotating member.

Accordingly, it is an object of the present invention to provide an improved brush seal that overcomes the above-mentioned drawbacks and disadvantages.

A brush seal assembly having the features of the preamble of claim 1 is disclosed in US-A-5 474 305.

### SUMMARY OF THE INVENTION

In one aspect of the present invention, a brush seal assembly comprises a brush seal including a back plate, a side plate and a plurality of bristles disposed between the back plate and the side plate. A resilient mounting ring includes at least one mounting section for coupling to the brush seal. The mounting ring defines a slot for being received over a projection of a housing to prevent the mounting ring and brush seal to rotate relative to the housing.

In another aspect of the present invention, a method of assembling a brush seal assembly comprises providing an annular brush seal including a back plate, a side plate and a plurality of bristles disposed between the back plate and the side plate. A resilient annular mounting ring is provided including a first mounting section, a second mounting section defining a slot, and a curved section extending between the mounting sections. An annular housing is provided including a mounting projection. The side plate of the annular brush seal is engaged with the first mounting section and the curved section of the mounting ring. The brush seal is coupled to the mounting ring. The housing is engaged with the second mounting section and the curved section of the mounting ring such that the mounting projection of the housing is received in the slot defined by the second mounting section of the mounting ring.

### BRIEF DESCRIPTION OF THE DRAWINGS

FIG. 1 is a side elevation view of a high-pressure side of cartridge brush seal embodying the present invention.
FIG. 2 is a side elevation view of a low-pressure side of the cartridge brush seal of FIG. 1.
FIG. 3A is a side elevation view showing a procedural step of assembling a brush seal to a mounting ring in accordance with the present invention.
FIG. 3B is a side elevation view showing a procedural step of welding the brush seal to the mounting ring in accordance with the present invention.
FIG. 3C is a side elevation view showing a procedural step of assembling the brush seal and the mounting ring to a housing in accordance with the present invention.
FIG. 3D is a side elevation view showing a procedural step of inserting an anti-rotation pin of the housing into a slot in the mounting ring in accordance with the present invention.
FIG. 3E is a side elevation view showing the fully-assembled assembled brush seal.

### DETAILED DESCRIPTION OF THE PREFERRED EMBODIMENT

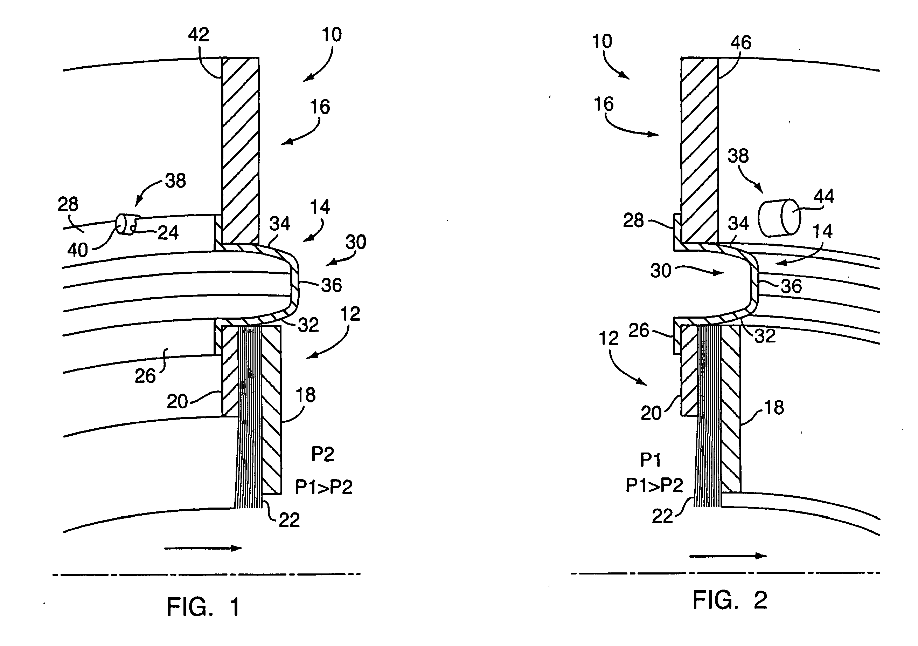

Referring to FIGS. 1-3, a cartridge-type brush seal assembly embodying the present invention is indicated generally by the reference number 10. The assembly 10 comprises an annular brush seal 12 and a resilient annular mounting ring 14 to be mounted to an annular housing or support such as, for example, a housing 16. The brush seal 12 includes a back plate 18, a side plate 20 and a plurality of bristles 22 disposed between the back plate and the side plate. The mounting ring 14, preferably made of metal, defines a slot 24 for the reason to be explained below. The mounting ring 14 includes a first mounting section or flange 26, a second mounting section or flange 28, and a substantially U-shaped or otherwise curved ring section 30 extending between the mounting sections. The ring section 30 itself has a first portion 32 extending from the first mounting section 26, and a second portion 34 extending from the second mounting section 28. The first and second portions 32, 34 join one another at a distal end 36 relative to the mounting sections 26, 28.

As shown in FIG. 1, the annular housing or support 16 includes a projection or anti-rotation pin 38 having a first end 40 extending radially outwardly from a first or high-pressure side 42 (see FIG. 1) of the annular housing 16, and having a second end 44 extending radially outwardly from a second or low-pressure side 46 (see FIG. 2) of the annular housing. As shown in FIG. 1, the first end 40 of the projection 38 is received in the slot 24 defined by the mounting ring 14 to prevent the mounting ring and the brush seal 12 carried thereon from rotating relative to the housing 16. Preferably, the size or diameter of the first end 40 of the projection 38 is different from the size or diameter of the second end 44 in order to ensure that the mounting ring 14 is coupled to the housing 16 in the proper orientation. As shown in FIGS. 1 and 2, for example, the first end 40 of the projection 38 has a smaller diameter relative to that of the second end 44 of the projection so that only the first end is sized to be received in the slot 24 of the mounting ring 14.

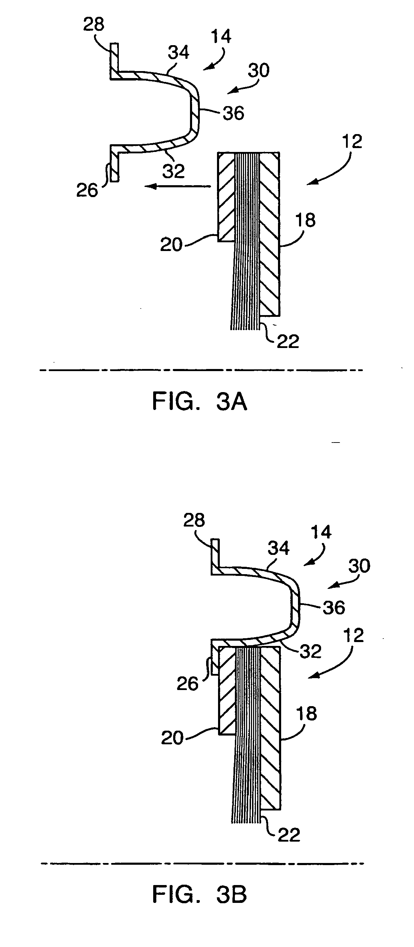

The process for assembling the brush seal assembly 10 in accordance with the present invention will now be explained with reference to FIGS. 3A through 3E. As shown in FIG. 3A, the brush seal 12 is pressed into engagement with the mounting ring 14 such that the side plate 20 abuts the first mounting section 26 of the mounting ring, and such that end portions of the side plate 20, the plurality of bristles 22 and the back plate 18 abut the first portion 32 of the ring section 30. The mounting ring 14 can be coupled to either an outer diameter of an inner diameter pointing brush seal, or to an inner diameter of an outer diameter pointing brush seal. As shown in FIG. 3B, the side plate 20 of the brush seal 12 is coupled to the first mounting section 26 of the mounting ring 14 by suitable coupling techniques such as, for example, soldering, brazing, welding and adhesive bonding.

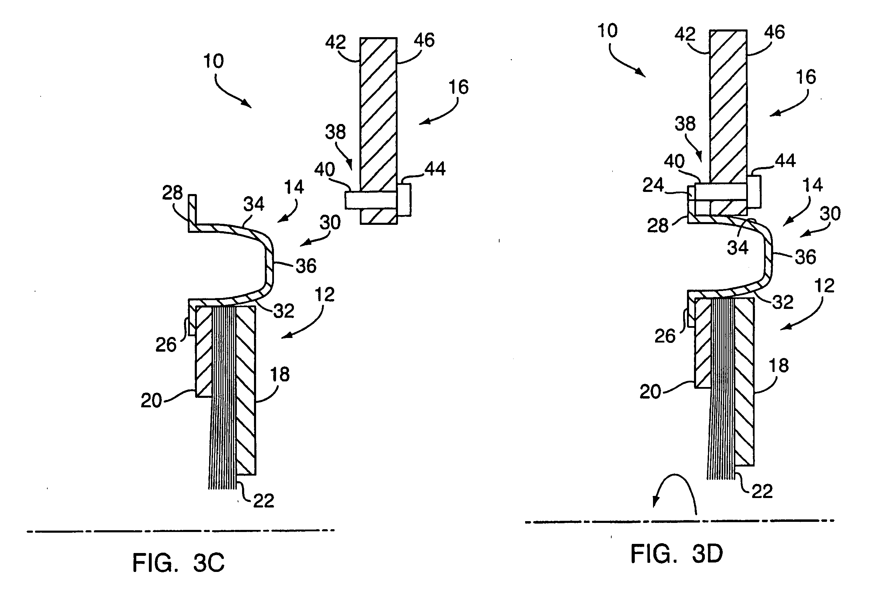

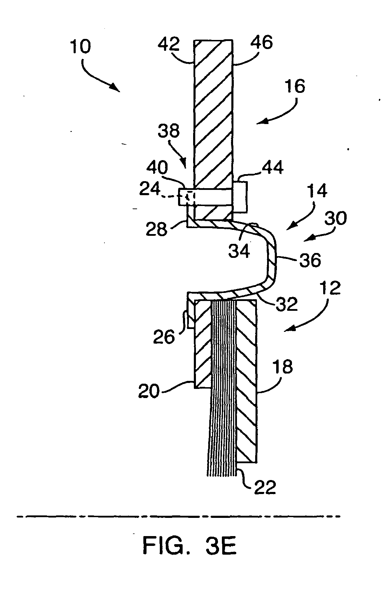

With reference to FIG. 3C, the mounting ring 14 carrying the brush seal 12 is pushed into engagement with the housing 16 such that the second mounting section 28 generally abuts the housing. The mounting ring 14 and the brush seal 12 carried thereon are rotated relative to the housing 16 until the first end 40 of the projection 38 is aligned with the slot 24 of the mounting ring (see FIG. 3D). The mounting ring 14 is then further moved toward the housing 16 such that the first end 40 of the projection 38 of the housing is received through the slot 24 of the mounting ring 14 (see FIG. 3E). The resilient mounting ring 14 acts as a spring and creates a light pressure on the housing 16. This pressure, along with a positive pressure drop across the brush seal 12 when in an operating environment holds the assembly 10 in place.

The present invention is well suited to be embodied as a small diameter (e.g., 12.7 mm (6 inch) outer diameter or less) low cost brush seal. Suitable applications of the present invention include, but are not limited to, small axial and centrifugal compressors, screw compressors, and small engines such as, for example, small aircraft engines.

There are several benefits for employing a brush seal assembly in accordance with the present invention. The benefits include:
1) The brush seal assembly can be installed and removed without any special tools (preferably without any tools whatsoever);
2) The brush seal and support "fit diameters" can be machined to tolerances looser than those of current designs; the formed mounting ring, acting as a spring, can take up some of the deviations in size of the two pieces of hardware;
3) Reduced machining of support/housing structure, as there is no need to incorporate a diameter "step" to locate the downstream side of the seal;
4) Welding (or otherwise joining) the seal and mounting ring together eliminates the need for an anti-rotation device between the seal and mounting ring;
5) The anti-rotation device, a pin larger (i.e., head) on the downstream side than the upstream (part mounting) side, fool-proofs installation; and
6) Pressure loading holds the seal in place during operation (mounting ring must locate on upstream side of seal as shown in figures).
As will be recognized by those of ordinary skill in the pertinent art, numerous modifications and substitutions can be made to the above-described embodiment of the present invention without departing from the scope of the invention as defined by the appended claims. Accordingly, the preceding portion of this specification is to be taken in an illustrative, as opposed to a limiting sense.

## Claims

1. A brush seal assembly (10) comprising:
a brush seal (12) including a back plate (18), a side plate (20) and a plurality of bristles (22) disposed between the back plate (18) and the side plate (20); and **characterised by** further comprising :
a resilient mounting ring (14) including at least one mounting section (26) for coupling to the brush seal (12), the mounting ring (14) defining a slot (24) for being received over a projection (40) of a housing (16) to prevent the mounting ring (14) and brush seal (12) to rotate relative to the housing.

2. A brush seal assembly as defined in claim 1, wherein the brush seal (12) and the mounting ring (14) are annular in configuration.

3. A brush seal assembly as defined in claim 1 or 2, wherein the mounting ring (14) includes:
a first mounting section (26):
a second mounting section (28); and
a curved ring section (30) extending between the first and second mounting sections (26, 28).

4. A brush seal assembly as defined in claim 3, wherein the first and second mounting sections (26, 28) each include a flange.

5. A brush seal assembly as defined in claim 3 or 4, wherein the curved ring section (30) is substantially U-shaped.

6. A brush seal assembly as defined in claim 3, 4 or 5, wherein the side plate (20) abuts one of the mounting sections (26) and abuts the curved ring section (30).

7. A method of assembling a brush seal assembly (10), comprising the steps of:
providing an annular brush seal (12) including a back plate (18), a side plate (20) and a plurality of bristles (22) disposed between the back plate (18) and the side plate (20);
providing a resilient annular mounting ring (14) including a first mounting section (26), a second mounting section (28) defining a slot (24), and a curved section (30) extending between the mounting sections (26, 28);
providing an annular housing (16) including a mounting projection (40);
engaging the side plate (20) of the annular brush seal (12) with the first mounting section (26) and the curved section (30) of the mounting ring (14);
coupling the brush seal (12) to the mounting ring (14); and
engaging the housing (16) with the second mounting section (28) and the curved section (30) of the mounting ring (14) such that the mounting projection (40) of the housing (16) is received in the slot (24) defined by the second mounting section (28) of the mounting ring (14).

8. A method of assembling as defined in claim 7, wherein the step of coupling the brush seal (12) to the mounting ring (14) includes soldering the brush seal (12) to the mounting ring (14).

9. A method of assembling as defined in claim 7, wherein the step of coupling the brush seal (12) to the mounting ring (14) includes brazing the brush seal (12) to the mounting ring (14).

10. A method of assembling as defined in claim 7, wherein the step of coupling the brush seal (12) to the mounting ring (14) includes welding the brush seal (12) to the mounting ring (14).

11. A method of assembling as defined in claim 7, wherein the step of coupling the brush seal (12) to the mounting ring (14) includes adhesively bonding the brush seal (12) to the mounting ring (14).

## Patentansprüche

1. Bürstendichtungsanordnung (1), aufweisend:
eine Bürstendichtung (12), die eine Rückenplatte (18), eine Seitenplatte (20) und
eine Mehrzahl von Borsten (22) aufweist, die zwischen der Rückenplatte (18) und
der Seitenplatte (20) angeordnet sind;
**dadurch gekennzeichnet, dass** sie ferner Folgendes aufweist:
einen federnd nachgiebigen Montagering (14), der zumindest einen Montageabschnitt (26) zur Verbindung mit der Bürstendichtung (12) aufweist, wobei der Montagering (14) einen Schlitz (24) zur Aufnahme über einem Vorsprung (40) eines Gehäuses (16) bildet, um eine Rotation des Montagerings (14) und der Bürstendichtung (12) relativ zu dem Gehäuse zu verhindern.

2. Bürstendichtungsanordnung nach Anspruch 1,
wobei die Bürstendichtung (12) und der Montagering (14) eine ringförmige Konfiguration aufweisen.

3. Bürstendichtungsanordnung nach Anspruch 1 oder 2,
wobei der Montagering (14) Folgendes aufweist:
einen ersten Montageabschnitt (26);
einen zweiten Montageabschnitt (28); und
einen gekrümmten Ringabschnitt (30), der sich zwischen dem ersten und dem zweiten Montageabschnitt (26, 28) erstreckt.

4. Bürstendichtungsanordnung nach Anspruch 3,
wobei der erste und der zweite Montageabschnitt (26, 28) jeweils einen Flansch aufweisen.

5. Bürstendichtungsanordnung nach Anspruch 3 oder 4,
wobei der gekrümmte Ringabschnitt (30) im Wesentlichen U-förmig ist.

6. Bürstendichtungsanordnung nach Anspruch 3, 4 oder 5,
wobei die Seitenplatte (20) an einem von den Montageabschnitten (26) anliegt sowie an dem gekrümmten Ringabschnitt (30) anliegt.

7. Verfahren zum Montieren einer Bürstendichtungsanordnung (10), wobei das Verfahren folgende Schritte aufweist:
Bereitstellen einer ringförmigen Bürstendichtung (12), die eine Rückenplatte (18), eine Seitenplatte (20) und eine Mehrzahl von Borsten (22) aufweist, die zwischen der Rückenplatte (18) und der Seitenplatte (20) angeordnet sind;
Bereitstellen eines federnd nachgiebigen Montagerings (14), der einen ersten Montageabschnitt (26), einen zweiten Montageabschnitt (28), der einen Schlitz (24) bildet, sowie einen gekrümmten Abschnitt (30) aufweist, der sich zwischen den Montageabschnitten (26, 28) erstreckt;
Bereitstellen eines ringförmigen Gehäuses (16), das einen Montagevorsprung (40) aufweist;
In-Eingriff-Bringen der Seitenplatte (20) der ringförmigen Bürstendichtung (12) mit dem ersten Montageabschnitt (26) und dem gekrümmten Abschnitt (30) des Montagerings (14);
Verbinden der Bürstendichtung (12) mit dem Montagering (14); und
In-Eingriff-Bringen des Gehäuses (16) mit dem zweiten Montageabschnitt (28) und dem gekrümmten Abschnitt (30) des Montagerings (14) in einer derartigen Weise, dass der Montagevorsprung (40) des Gehäuses (16) in dem von dem zweiten Montageabschnitt (28) des Montagerings (14) gebildeten Schlitz (24) aufgenommen wird.

8. Montageverfahren nach Anspruch 7,
wobei der Schritt des Verbindens der Bürstendichtung (12) mit dem Montagering (14) das Verlöten der Bürstendichtung (12) mit dem Montagering (14) durch Weichlöten beinhaltet.

9. Montageverfahren nach Anspruch 7,
wobei der Schritt des Verbindens der Bürstendichtung (12) mit dem Montagering (14) das Verlöten der Bürstendichtung (12) mit dem Montagering (14) durch Hartlöten beinhaltet.

10. Montageverfahren nach Anspruch 7,
wobei der Schritt des Verbindens der Bürstendichtung (12) mit dem Montagering (14) das Verschweißen der Bürstendichtung (12) mit dem Montagering (14) beinhaltet.

11. Montageverfahren nach Anspruch 7,
wobei der Schritt des Verbindens der Bürstendichtung (12) mit dem Montagering (14) das haftende Verbinden der Bürstendichtung (12) mit dem Montagering (14) beinhaltet.

## Revendications

1. Ensemble de joint à brosse (10), comprenant :
un joint à brosse (12) comprenant une plaque arrière (18), une plaque latérale (20) et une pluralité de poils (22) disposés entre la plaque arrière (18) et la plaque latérale (20) ; et **caractérisé en ce qu'**il comprend en outre :
une bague de montage élastique (14) comprenant au moins une section de montage (26) conçue pour être couplée au joint à brosse (12), la bague de montage (14) définissant une fente (24) conçue pour être reçue au-dessus d'une saillie (40) d'un boîtier (16), pour empêcher la bague de montage (14) et le joint à brosse (12) de tourner par rapport au boîtier.

2. Ensemble de joint à brosse selon la revendication 1, dans lequel le joint à brosse (12) et la bague de montage (14) ont une configuration annulaire.

3. Ensemble de joint à brosse selon la revendication 1 ou 2, dans lequel la bague de montage (14) comprend :
une première section de montage (26) ;
une seconde section de montage (28) ; et
une section annulaire courbe (30) s'étendant entre la première et la seconde section de montage (26, 28).

4. Ensemble de joint à brosse selon la revendication 3, dans lequel la première et la seconde section de montage (26, 28) comprennent chacune une bride.

5. Ensemble de joint à brosse selon la revendication 3 ou 4, dans lequel la section annulaire courbe (30) est sensiblement en forme de U.

6. Ensemble de joint à brosse selon la revendication 3, 4 ou 5, dans lequel la plaque latérale (20) bute contre une des sections de montage (26) et bute contre la section annulaire courbe (30).

7. Procédé d'assemblage d'un ensemble de joint à brosse (10), comprenant les étapes consistant à :
fournir un joint à brosse annulaire (12) comprenant une plaque arrière (18), une plaque latérale (20) et une pluralité de poils (22) disposés entre la plaque arrière (18) et la plaque latérale (20) ;
fournir une bague de montage élastique annulaire (14) comprenant une première section de montage (26), une seconde section de montage (28) définissant une fente (24), et une section courbe (30) s'étendant entre les sections de montage (26, 28) ;
fournir un boîtier annulaire (16) comprenant une saillie de montage (40) ;
mettre en prise la plaque latérale (20) du joint à brosse annulaire (12) avec la première section de montage (26) et la section incurvée (30) de la bague de montage (14) ;
coupler le joint à brosse (12) à la bague de montage (14) ; et
mettre en prise le boîtier (16) avec la seconde section de montage (28) et la section incurvée (30) de la bague de montage (14) de telle sorte que la saillie de montage (40) du boîtier (16) soit reçue dans la fente (24) définie par la seconde section de montage (28) de la bague de montage (14).

8. Procédé d'assemblage selon la revendication 7, dans lequel l'étape de couplage du joint à brosse (12) à la bague de montage (14) consiste à souder par brasage tendre le joint à brosse (12) à la bague de montage (14).

9. Procédé d'assemblage selon la revendication 7, dans lequel l'étape de couplage du joint à brosse (12) à la bague de montage (14) consiste à souder par brasage fort le joint à brosse (12) à la bague de montage (14).

10. Procédé d'assemblage selon la revendication 7, dans lequel l'étape de couplage du joint à brosse (12) à la bague de montage (14) consiste à souder par fusion le joint à brosse (12) à la bague de montage (14).

11. Procédé d'assemblage selon la revendication 7, dans lequel l'étape de couplage du joint à brosse (12) à la bague de montage (14) consiste à assembler par callage le joint à brosse (12) et la bague de montage (14).
